# EUROPÄISCHE PATENTANMELDUNG

(11) **EP 3 138 650 A1**
(43) Veröffentlichungstag der Anmeldung: **08.03.2017**
(21) Anmeldenummer: 15183742.4
(22) Anmeldetag: 03.09.2015
(51) Int. Cl.: B23K 9/173, B23K 1/20, B23K 9/235, B23K 9/32, B23K 26/06, B23K 103/10, B23K 103/08

(54) **VORRICHTUNG UND VERFAHREN ZUM LICHTBOGENSCHWEISSEN ODER LICHTBOGENLÖTEN MIT EINER ABSCHMELZENDEN ELEKTRODE**

(71) Anmelder: EWM AG, 56271 Mündersbach (DE)
(72) Erfinder: SCHRICKER, Klaus, 98693 Ilmenau (DE); BERGMANN, Jean Pierre, 99096 Erfurt (DE); SZCZESNY, Michael, 56271 Mündersbach (DE)
(74) Vertreter: Cohausz & Florack

(57) **Zusammenfassung**

Die Erfindung betrifft eine Vorrichtung (2) zum Lichtbogenschweißen oder Lichtbogenlöten mit einer abschmelzenden Elektrode, insbesondere zum Schweißen oder Löten unter Schutzgas, mit einem Schweißbrenner (10), der zum Lichtbogenschweißen oder Lichtbogenlöten mit einer abschmelzenden Elektrode, insbesondere zum Schweißen oder Löten unter Schutzgas (18), eingerichtet ist, wobei die Vorrichtung (2) weiterhin eine Wärmeeintragseinrichtung (30,100, 200, 300) umfasst, die dazu eingerichtet ist, zusätzliche Wärme in den Schweiß- oder Lötbereich (8) des Schweißbrenners (10) einzubringen, insbesondere mittels mindestens eines Laserstrahls (40, 42, 46,110, 214). Die Erfindung betrifft weiterhin ein Verfahren zum Lichtbogenschweißen oder Lichtbogenlöten mit einer abschmelzenden Elektrode, insbesondere zum Schweißen oder Löten unter Schutzgas, bei dem ein Werkstück (4,6) in einem Schweißbereich (8) mit einer abschmelzenden Elektrode lichtbogengeschweißt bzw. in einem Lötbereich (8) mit einer abschmelzenden Elektrode lichtbogengelötet wird und bei dem zusätzliche Wärme in den Schweiß- oder Lötbereich (8) eingebracht wird, insbesondere mittels mindestens eines Laserstrahls (40, 42, 46, 110,214).

## Beschreibung

Die Erfindung betrifft eine Vorrichtung zum Lichtbogenschweißen oder Lichtbogenlöten mit einer abschmelzenden Elektrode, insbesondere zum Schweißen oder Löten unter Schutzgas, mit einem Schweißbrenner, der zum Lichtbogenschweißen oder Lichtbogenlöten mit einer abschmelzenden Elektrode, insbesondere zum Schweißen oder Löten unter Schutzgas, eingerichtet ist. Weiterhin betrifft die Erfindung ein Verfahren zum Lichtbogenschweißen oder Lichtbogenlöten mit einer abschmelzenden Elektrode, insbesondere zum Schweißen oder Löten unter Schutzgas, vorzugsweise unter Verwendung der zuvor beschriebenen Vorrichtung.

Aus dem Stand der Technik sind Schweißbrenner zum Metallschutzgasschweißen (MSG-Schweißen) und Metallschutzgaslöten (MSG-Löten) bekannt.

Beim Metallschutzgasschweißen wird zwischen dem zu fügenden Werkstück und einer abschmelzenden Drahtelektrode des Schweißbrenners ein Lichtbogen gezündet. Der Lichtbogen trägt eine erhebliche Wärme in das zu fügende Werkstück ein, so dass der Werkstoff des Werkstücks im Schweißbereich aufschmilzt. Gleichzeitig führt der Lichtbogen auch zum Abschmelzen der Drahtelektrode, so dass diese Material für das Schweißbad zur Verfügung stellt.

Das Metallschutzgaslöten verläuft in ähnlicher Weise, wobei jedoch nur die Drahtelektrode, nicht jedoch der Werkstoff des zu fügenden Werkstücks schmilzt.

Abhängig von der Zusammensetzung und Dicke des zu fügenden Werkstücks kann die zum Schweißen bzw. Löten erforderliche Wärmemenge variieren, teilweise sogar über eine Schweißbahn hinweg. Bei herkömmlichen Schweißbrennern wird der Wärmeeintrag über den Lichtbogen eingestellt. Benötigt der Schweißer beispielsweise einen höheren Wärmeeintrag, so erhöht er den Schweißstrom am Schweißgerät. Hierdurch wird auch die Leistung am Lichtbogen und damit die durch diesen pro Zeit für den Fügevorgang bereitgestellte Wärmemenge erhöht.

Mit einem höheren Lichtbogenstrom geht auch ein verstärktes Abschmelzen der Drahtelektrode einher, so dass bei einer Erhöhung des Wärmeeintrags durch Erhöhung des Schweißstroms immer auch der Materialeintrag der Drahtelektrode erhöht wird. Dies ist jedoch nicht unbedingt erwünscht. Insbesondere kann bei einer Schweißverbindung ein höherer Wärmeeintrag erforderlich sein, ohne dass zusätzliches Material der Drahtelektrode benötigt wird. Eine unnötige Erhöhung des Materialeintrags der Drahtelektrode kann dann zu ungleichmäßigen Schweißnähten führen.

Wird umgekehrt der Schweißstrom reduziert, um den Materialeintrag der Drahtelektrode auf die erforderliche Menge zu begrenzen, so kann unter Umständen der zur Verfügung stehende Wärmeeintrag zu gering sein, so dass es zu schlechten Schweißergebnissen kommen kann.

Dieses Problem tritt in der Praxis insbesondere beim Fügen von Leichtbauwerkstoffen auf. Leichtbauwerkstoffe sind heute keine Seltenheit mehr. Neben Aluminiumlegierungen nehmen die Magnesiumlegierungen einen immer höheren Stellenwert ein und werden in der Zukunft verstärkt eingesetzt werden.

Magnesium ist mit einem Anteil von mehr als 2% das fünfthäufigste Element auf der Erde. Magnesium ist somit in quasi unbegrenzter Menge verfügbar. Magnesium in reiner Form besitzt ein sehr dichtes Atomgitter und ist dadurch bei Raumtemperatur nur sehr schlecht verformbar. Erwärmt man Magnesium auf eine Temperatur zwischen 200°C und 300°C ist es jedoch hervorragend formbar.

Magnesium hat einen Schmelzpunkt von 654°C und eine Dichte von 1,74 g/cm³ und ist damit der leichteste Konstruktionswerkstoff. Aufgrund dieses Leichtbaupotentials gewinnt es weiter stark an Bedeutung. Mit Magnesium lassen sich Gewichtseinsparungen von 35% gegenüber Aluminium und sogar bis zu 75% im Vergleich zu Stahl realisieren. Bei identischer Festigkeit und Steifheit der Bauteile sind dies immer noch etwa 20% an Gewicht, das im Vergleich zu Stahl eingespart werden kann. Gegenwärtig werden Magnesiumlegierungen in Gussbauteilen, in der Luft- und Raumfahrttechnik, sowie in Komponenten im Mobilitätssektor verwendet. Aufgrund seiner geringen Dichte, verbunden mit einer hohen Festigkeit und Steifigkeit, erfahren Magnesiumlegierungen gerade im Bereich der ressourcenschonenden Mobilität zurzeit großes Interesse.

Die Vision, Magnesiumlegierungen als primären Leichtbauwerkstoff in der Produktion von Automobilkarosserien einzusetzen, besteht seit langem, jedoch stehen hier sowohl werkstoff- als auch fertigungstechnische Aspekte dagegen.

Das Schweißen und Löten von Magnesiumwerkstoffen und Magnesium-Aluminium Legierungen zum Beispiel in der Automobilindustrie verlangt eine hohe Reproduzierbarkeit der Fügeergebnisse. Die Reproduzierbarkeit wird im Wesentlichen von zwei Faktoren bestimmt. Zum einen dem geringen Temperaturintervall zwischen schmelzflüssiger Phase der Magnesiumlegierungen und der Verdampfungstemperatur. Zum anderen besitzt Magnesium eine sehr hohe Wärmeleitfähigkeit, was einen hohen Wärmeeintrag in das zu fügende Werkstück nötig macht, um stabile Fügeprozesse zu erreichen.

Vor diesem Hintergrund liegt der vorliegenden Erfindung die Aufgabe zugrunde, eine Vorrichtung und ein Verfahren zum Lichtbogenschweißen oder Lichtbogenlöten zur Verfügung zu stellen, mit denen bessere und reproduzierbare Schweiß- bzw. Lötergebnisse erzielt werden können, insbesondere zum Fügen von Leichtbauwerkstoffen wie Magnesiumwerkstoffen.

Diese Aufgabe wird bei einer Vorrichtung zum Lichtbogenschweißen oder Lichtbogenlöten mit einer abschmelzenden Elektrode, insbesondere zum Schweißen oder Löten unter Schutzgas, mit einem Schweißbrenner, der zum Lichtbogenschweißen oder Lichtbogenlöten mit einer abschmelzenden Elektrode, insbesondere zum Schweißen oder Löten unter Schutzgas, eingerichtet ist, erfindungsgemäß zumindest teilweise dadurch gelöst, dass die Vorrichtung weiterhin eine Wärmeeintragseinrichtung umfasst, die dazu eingerichtet ist, zusätzliche Wärme in den Schweiß- oder Lötbereich des Schweißbrenners einzubringen, insbesondere mittels mindestens eines Laserstrahls.

Weiterhin wird die zuvor genannte Aufgabe erfindungsgemäß zumindest teilweise gelöst durch ein Verfahren zum Lichtbogenschweißen oder Lichtbogenlöten mit einer abschmelzenden Elektrode, insbesondere zum Schweißen oder Löten unter Schutzgas, vorzugsweise unter Verwendung der zuvor beschriebenen Vorrichtung, bei dem ein Werkstück in einem Schweißbereich mit einer abschmelzenden Elektrode lichtbogengeschweißt bzw. in einem Lötbereich mit einer abschmelzenden Elektrode lichtbogengelötet wird und bei dem zusätzliche Wärme in den Schweiß- bzw. Lötbereich eingebracht wird, insbesondere mittels mindestens eines Laserstrahls.

Mit der zuvor beschriebenen Vorrichtung und dem zuvor beschriebenen Verfahren kann eine Entkoppelung des Wärmeeintrags vom Materialeintrag der Drahtelektrode in den Schweiß- bzw. Lötbereich erreicht werden. Durch das Vorsehen einer zusätzlichen Wärmeeintragseinrichtung kann der Wärmeeintrag in den Schweiß- bzw. Lötbereich unabhängig von der Leistung am Lichtbogen erhöht werden, so dass der Materialeintrag der Drahtelektrode und der Wärmeeintrag unabhängig voneinander auf den jeweils gewünschten Wert eingestellt werden können. Auf diese Weise lassen sich bessere Schweiß- bzw. Lötergebnisse erzielen.

Versuche haben gezeigt, dass sich durch die Kombination eines Lichtbogenfügeprozesses, insbesondere eines emissions- und wärmereduzierten MSG-Kurzlichtbogenprozesses, mit einer zusätzlichen Wärmeeintragseinrichtung zur optimalen Wärmeführung, beispielsweise umfassend mindestens einen Halbleiterlaser, ungewollte Emissionen und Spritzer sowie eine ungenügende Benetzung am zu fügenden Werkstück vermeiden lassen. Insbesondere können auf diese Weise eine eruptionsartige Verdampfung des durch den Lichtbogen bei jedem Tropfenübergang eingebrachten Schweißzusatzwerkstoffs sowie die Nichtanbindung durch schlechte Benetzung der Oberfläche des Schweißgutes vermieden werden.

Die Vorrichtung umfasst einen Schweißbrenner, der zum Lichtbogenschweißen oder Lichtbogenlöten mit einer abschmelzenden Elektrode, insbesondere zum Schweißen oder Löten unter Schutzgas, eingerichtet ist. Derartige Schweißbrenner sind aus dem Stand der Technik allgemein bekannt und bedürfen daher hier keiner genaueren Erläuterung.

Vorzugsweise handelt es sich bei dem Schweißbrenner um einen Schweißbrenner zum Metallschutzgasschweißen. Derartige Schweißbrenner weisen typischerweise eine Drahtelektrodenführung auf, mit der eine Drahtelektrode von einer Drahtfördervorrichtung aus der Schweißdüse des Schweißbrenners zum Schweißbereich bzw. Lötbereich geführt werden kann. Weiterhin weist ein solcher Schweißbrenner typischerweise Anschlussmittel zum Anschluss an eine Schweißstromquelle auf sowie Kontaktierungsmittel wie eine Kontakthülse, um die Drahtelektrode elektrisch mit einem Pol der Schweißstromquelle zu verbinden, so dass zwischen der Drahtelektrode und dem zu schweißenden bzw. zu lötenden Werkstück ein Lichtbogen gezündet werden kann. Weiterhin kann ein solcher Schweißbrenner eine Schutzgaszuführung aufweisen, über die ein Schutzgas in den Schweißbereich bzw. Lötbereich geführt werden kann, insbesondere durch die Schweißdüse.

Unter dem Schweißbereich bzw. Lötbereich wird vorliegend der Bereich um die aktuelle Schweißposition bzw. Lötposition verstanden. Dieser Bereich umfasst insbesondere den Teil des Werkstücks bzw. des Materials der Drahtelektrode, der während des Schweißens bzw. Lötens durch den Lichtbogen verflüssigt oder erweicht ist. Beim Schweißen bzw. Löten einer Naht bewegt sich der Schweiß- bzw. der Lötbereich also mit der Position des Lichtbogens auf dem Werkstück mit.

Bei der Wärmeeintragseinrichtung handelt es sich um eine Einrichtung, mit der unabhängig vom Lichtbogen zusätzliche Wärme in den Schweiß- oder Lötbereich des Schweißbrenners einbringbar ist. Unter der "zusätzlichen Wärme" wird verstanden, dass die Wärme zusätzlich zu der durch den Lichtbogen eingebrachten Wärme eingebracht wird.

Durch die zusätzliche Erwärmung des Schweiß- bzw. Lötbereichs mithilfe der Wärmeeintragseinrichtung, insbesondere mithilfe eines Lasers, kann die Temperatur am Werkstück so eingestellt werden, dass eine zu rasche Abkühlung und Erstarrung des Schmelztropfens nicht erfolgt. Die Werkstücke können dann mit Hilfe des Lichtbogens unter Aufschmelzung mit dem durch die Drahtelektrode bereitgestellten Zusatzwerkstoff verschweißt werden.

Dies ist insbesondere für Leichtbauwerkstoffe wie Magnesium und Magnesiumlegierungen vorteilhaft. Dadurch dass die für das Fügen erforderliche Wärme separat vom Lichtbogen eingestellt wird, kann die durch den Lichtbogen eingebrachte Wärme minimiert werden, so dass es nur zu einer sehr geringen Überhitzung des Grundwerkstoffs der Werkstücke und von Fügezusatzwerkstoffen wie des Werkstoffs der Drahtelektrode kommt, so dass sich der Füge-Spalt (Schweiß-Spalt) vollständig füllen bzw. die Oberfläche der zu fügenden Werkstücke benetzen lassen, ohne dass das der Grundwerkstoff oder Zusatzwerkstoff zu hohe Temperaturen erfährt und verdampft.

Die zusätzliche Wärme kann unmittelbar in den Schweiß- oder Lötbereich eingebracht werden, insbesondere unmittelbar in den Bereich, in dem das Werkstück bzw. das Material der Drahtelektrode verflüssigt oder erweicht ist. Alternativ kann die Wärme auch unmittelbar neben dem Schweiß- bzw. Lötbereich eingebracht werden, so dass die Wärme durch Wärmeleitung im Werkstück in den Schweiß- bzw. Lötbereich gelangt. Ebenso kann die Wärme auch an einer Stelle eingebracht werden, die anschließend in den Schweiß- bzw. Lötbereich fällt. Dies ist beispielsweise der Fall, wenn die Wärme an einer Stelle des Werkstücks eingebracht wird, die in Schweiß- bzw. Lötrichtung vor dem Schweiß- bzw. Lötbereich liegt, d.h. im folgenden Verlauf der Naht. Auf diese Weise kann das Werkstück für den Schweiß- bzw. Lötvorgang vorgewärmt werden.

Die Wärmeeintragung erfolgt vorzugsweise durch mindestens einen Laserstrahl. Hierzu wird der Laserstrahl auf das Werkstück gerichtet, so dass durch Absorption Wärme in das Werkstück eingebracht wird. Mit einem Laserstrahl lässt sich die Wärme sehr zielgerichtet und genau dosiert einbringen.

Der Laserstrahl dient dazu, Wärme in den Schweiß- oder Lötbereich einzubringen. Zu diesem Zweck ist die Leistungsdichte des Laserstrahls insbesondere so bemessen, dass die Energie des Laserstrahls allein nicht zum Aufschmelzen des Werkstücks bzw. des Materials der Drahtelektrode ausreicht. Dies unterscheidet das hier beschriebene Verfahren und die hier beschriebene Vorrichtung insbesondere vom Laserschweißen. Beim Laserschweißen wird der Laser so stark fokussiert, dass das zu fügende Werkstück allein durch die Energie des Lasers aufschmilzt.

Die hier beschriebene Vorrichtung und das hier beschriebene Verfahren eignen sich insbesondere zum Schweißen von Aluminium- oder Magnesiumwerkstücken, insbesondere im Kraftfahrzeugbau. Durch die hohe thermische Leitfähigkeit der Aluminium- bzw. Magnesiumlegierungen mit der Wärmeeintragseinrichtung eine effektive Vorwärmung des Werkstücks für das Schweißen bzw. Löten erfolgen, insbesondere bei Verwendung eines Laserstrahls.

Im Folgenden werden verschiedene Ausführungsformen der beschriebenen Vorrichtung und des beschriebenen Verfahrens erläutert, wobei die einzelnen Ausführungsformen jeweils sowohl für die Vorrichtung als auch für das Verfahren anwendbar sind. Weiterhin sind die Ausführungsformen auch untereinander kombinierbar.

Bei einer ersten Ausführungsform ist die Wärmeeinrichtung dazu eingerichtet, mittels mindestens eines Laserstrahls zusätzliche Wärme in den Schweiß- oder Lötbereich des Schweißbrenners einzubringen, wobei die Spotgröße des Laserstrahls im Schweiß- oder Lötbereich mindestens 3 mm beträgt. Bei einer entsprechenden Ausführungsform des Verfahrens wird das Werkstück im Schweiß- oder Lötbereich mit einem Laserstrahl beaufschlagt, wobei die Spotgröße des Laserstrahls am Werkstück mindestens 3 mm beträgt.

Unter der Spotgröße des Laserstrahls wird die vom Laserstrahl beleuchtete Fläche am Werkstück verstanden.

Mit einer Spotgröße von mindestens 3 mm kann die Wärme gleichmäßiger in den Schweiß- bzw. Lötbereich eingebracht werden. Zudem wird verhindert, dass das Werkstück bzw. das Material der Drahtelektrode bereits durch die mit dem Laserstrahl eingebrachte Wärme aufschmilzt oder erweicht. Die Spotgröße von Laserschweißvorrichtungen liegt zum Vergleich typischerweise bei unter 1 mm, um die zum Aufschmelzen des Werkstoffs erforderliche Energie bereitzustellen.

Bei einer weiteren Ausführungsform weist die Wärmeeintragseinrichtung einen Körper mit einem rohrförmigen Lichtleithohlraum auf, wobei der Lichtleithohlraum zu einer optischen Austrittsöffnung verläuft und wobei an dem Körper eine Lasereinkopplungseinrichtung vorgesehen ist, die dazu eingerichtet ist, einen Laserstrahl in den rohrförmigen Lichtleithohlraum einzukoppeln, so dass der Laserstrahl durch den Lichtleithohlraum und die optische Austrittsöffnung in den Schweiß- oder Lötbereich des Schweißbrenners gelangt.

Unter einem Lichtleithohlraum wird vorliegend ein durch Innenwände des Körpers seitlich begrenzter Hohlraum verstanden, durch den das Laserlicht durch Reflexion an den Wänden geleitet werden kann. Unter dem Einkoppeln eines Laserstrahls in den Lichtleithohlraum wird verstanden, dass der Laserstrahl so in den Lichtleithohlraum hinein geführt wird, dass er durch diesen geleitet werden kann.

Die Verwendung optischer Linsen zur Fokussierung eines Laserstrahls auf eine Werkstückoberfläche im Schweiß- oder Lötbereich hat sich als nachteilig herausgestellt, da die Linsen durch die hohen Temperaturen im Fügebereich bzw. umherspritzendes flüssiges Metall schnell verschmutzen oder beschädigt werden. Demgegenüber kann durch die Verwendung eines rohrförmigen Lichtleithohlraums eine Führung des Laserstrahls ohne diffraktive oder refraktive optische Elemente erreicht werden, sondern allein durch Reflexion des Laserstrahls an den Wänden des Lichtleithohlraums. Hierdurch lässt sich zum einen eine robustere Führung des Laserstrahls erreichen. Zum anderen ergibt sich eine Kostenersparnis gegenüber teuren diffraktiven oder refraktiven optischen Elementen, so dass der Körper mit dem Lichtleithohlraum im Bedarfsfall bei geringeren Kosten ausgewechselt werden kann.

Weiterhin kann durch die Reflexionen des Laserstrahls an den Wänden des Lichtleithohlraums eine Homogenisierung des Laserstrahls erreicht werden, so dass der aus der Austrittsöffnung austretende Laserstrahl eine gleichmäßigere Leistungsdichte aufweist und ein entsprechend gleichmäßigerer Wärmeeintrag in den Schweiß- bzw. Lötbereich erfolgen kann.

Die Wärmeeintragseinrichtung weist einen Körper mit einem rohrförmigen Lichtleithohlraum auf. Der Körper kann beispielsweise aus Metall, insbesondere aus Kupfer bestehen. Alternativ sind z.B. auch Keramikrohre möglich, die auf der Innenseite mit einem Metall wie zum Beispiel Kupfer beschichtet sind. Vorzugsweise sind die Wände des Lichtleithohlraums poliert, um die Reflektivität zu erhöhen und die Absorption des Laserstrahls im Lichtleithohlraum zu verringern. Es sind jedoch auch raue Lichtleithohlraumwände denkbar.

Der Körper der Wärmeeintragseinrichtung ist vorzugsweise gekühlt, um die durch eine teilweise Absorption des Laserstrahl hervorgerufene Wärme abzuführen. Zu diesem Zweck kann der Körper beispielsweise Kühlkanäle für ein Kühlmedium oder einen gas- oder flüssigkeitsgekühlten Kühlmantel aufweisen.

An dem Körper ist eine Lasereinkopplungseinrichtung vorgesehen. Die Lasereinkopplungseinrichtung kann beispielsweise eine Spiegelanordnung umfassen, mit der ein Laserstrahl in den rohrförmigen Lichtleithohlraum einkoppelbar ist. Alternativ kann die Lasereinkopplungseinrichtung auch eine Lichtleitfaser wie eine eine Glasfaser umfassen, mit der der Laserstrahl in den Lichtleithohlraum eingekoppelbar ist. Ebenso kann die Lasereinkopplungseinrichtung eine Laserdiode umfassen, so dass der Laserstrahl unmittelbar an der Lasereinkopplungseinrichtung erzeugt wird und ggf. keine Spiegel und/oder Glasfaserleitungen erforderlich sind.

Die Lasereinkopplungseinrichtung kann dazu eingerichtet sein, den Laser parallel oder unter einem Winkel zur optischen Achse des Lichtleithohlraums einzukoppeln. Unter der optischen Achse des Lichtleithohlraums wird die axiale Richtung des rohrförmigen Lichtleithohlraums verstanden. Ist der Lichtleithohlraum gekrümmt, so wird unter der optischen Achse jeweils die lokale axiale Richtung im entsprechenden Bereich des Lichtleithohlraums verstanden, in Bezug auf die Lasereinkopplungseinrichtung z.B. die lokale axiale Richtung im Bereich der Lasereinkopplungseinrichtung.

Unter der optischen Austrittsöffnung wird ein Bereich der Wärmeeintragseinrichtung verstanden, durch den der Laserstrahl aus der Wärmeeintragseinrichtung heraus in den Schweiß- bzw. Lötbereich gelangen kann. Beispielsweise kann es sich bei der optischen Austrittsöffnung um eine Öffnung oder um ein laserlichtdurchlässiges Fenster im Körper der Wärmeeintragseinrichtung handeln.

Der Laserstrahl gelangt durch die optische Austrittsöffnung in den Schweiß- bzw. Lötbereich des Schweißbrenners. Zu diesem Zweck ist die Wärmeeintragseinrichtung insbesondere so angeordnet und ausgerichtet, dass die optische Austrittsöffnung in Richtung des Schweiß- bzw. Lötbereichs weist. Vorzugsweise ist die optische Austrittsöffnung in unmittelbarer Nähe des Schweiß- bzw. Lötbereichs angeordnet, insbesondere in einem Abstand von der aktuellen Schweiß- bzw. Lötposition von weniger als 15 cm, insbesondere weniger als 10 cm.

Durch die Wahl der Lichtleithohlraumgeometrie ist es möglich, die Form des Laserstrahls und damit die Form des Laserspots im Schweiß- bzw. Lötbereich anzupassen. Insbesondere kann der Querschnitt des Lichtleithohlraums rund ausgebildet sein, beispielsweise kreis- oder ovalförmig. Ebenso sind eckige Querschnitte möglich, beispielsweise ein dreieckiger oder viereckiger, insbesondere quadratischer Querschnitt des Lichtleithohlraums.

Die Wärmeeintragseinrichtung weist im Bereich der optischen Austrittsöffnung vorzugsweise eine Bürstenanordnung als Laserschutz auf. Auf diese Weise können Personen in der Umgebung der Wärmeeintragseinrichtung vor unerwünschter Laserstreuung oder Laserlichtreflexen geschützt werden. Die Bürstenanordnung ist vorzugsweise so ausgebildet, dass sie während des Schweiß- bzw. Lötvorgangs auf das zu fügende Werkstück aufgesetzt werden kann, um eine Laserstrahlung in die Umgebung zu vermeiden.

Bei einer weiteren Ausführungsform ist an dem Körper der Wärmeeintragseinrichtung eine Mehrzahl an Lasereinkopplungseinrichtungen vorgesehen, von denen jede dazu eingerichtet ist, einen Laserstrahl in den rohrförmigen Lichtleithohlraum einzukoppeln. Es wurde erkannt, dass ein homogener aus der optischen Austrittsöffnung austretender Laserstrahl auch beim Einkoppeln mehrere Laserstrahlen in den Lichtleithohlraum erreicht werden kann. Insbesondere erfolgt durch die Reflexionen im Lichtleithohlraum eine Überlagerung und Homogenisierung der Laserstrahlen. Auf diese Weise kann die Menge der in den Schweiß- oder Lötbereich eingebrachten Wärme erhöht werden bzw. es können anstelle eines Lasers mit sehr hoher Intensität mehrere Laser mit geringerer Intensität verwendet werden. Dadurch lassen sich Kosten und besondere Sicherheitsvorkehrungen einsparen, die bei Lasern mit sehr hoher Intensität erforderlich sind.

Es können Laserstrahlen mit gleichen oder verschiedenen Wellenlängen eingekoppelt werden. Durch die Verwendung von Laserstrahlen mit verschiedenen Wellenlängen können die Laserstrahlen besser an die Absorptionseigenschaften des zu fügenden Werkstoffs angepasst werden. Insbesondere ergibt sich ein gemischtes Laserspektrum, mit dem ein höherer Wärmeeintrag in den Schweiß- bzw. Lötbereich erreicht werden kann..

An der Wärmeeintragseinrichtung ist vorzugsweise eine Pilotlasereinkopplungseinrichtung vorgesehen, mit der ein Pilotlaserstrahl in den Lichtleithohlraum eingekoppelt werden kann. Unter einem Pilotlaserstrahl wird ein Laserstrahl verstanden, der dazu geeignet ist, durch seinen Spot auf dem Werkstück die Positionierung der Wärmeeintragseinrichtung anzuzeigen. Insbesondere verläuft ein solcher Pilotlaserstrahl auf oder parallel zu der optischen Achse des Lichtleithohlraums. Vorzugsweise sind die Richtung und der Strahldurchmesser des Pilotlaserstrahls so gewählt, dass der Pilotlaserstrahl im Wesentlichen reflexionsfrei durch den Lichtleithohlraum in den Schweiß- bzw. Lötbereich gelangt.

Bei einer weiteren Ausführungsform weist der Lichtleithohlraum einen sich in Richtung der optischen Austrittsöffnung verjüngenden, konischen Abschnitt auf, wobei der Winkel des konischen Abschnitts zur optischen Achse des Lichtleithohlraums vorzugsweise im Bereich von 2° und 10°, insbesondere von 2° bis 5°, liegt. Durch den konischen Abschnitt lässt sich der Laserstrahl fokussieren und auf die gewünschte Form bringen. Weiterhin ermöglicht ein solcher konischer Abschnitt eine breitere Ausgestaltung des Lichtleithohlraums im Bereich der Lasereinkopplung. Auf diese Weise steht insbesondere bei mehreren Lasereinkopplungseinrichtung ein größerer Bauraum zur Verfügung. Der konische Abschnitt kann sich auch über die gesamte Länge des Lichtleitholraums erstrecken.

Vorzugsweise werden der Winkel des konischen Abschnitts zur optischen Achse des Lichtleithohlraums und die Länge Lichtleithohlraums so gewählt, dass der oder die Laserstrahlen zwei- bis fünfmal, insbesondere dreimal, an den Wänden des Lichtleithohlraums reflektiert werden. Bei nur einer Reflexion ist die Strahlformung weniger gut, bei mehr als fünf Reflexionen sind die Reflexionsverluste zu stark. Eine dreimalige Reflexion hat sich als optimaler Kompromiss zwischen einerseits einer guten Strahlformung und Durchmischung der Laserstrahlen und andererseits einem vertretbaren Reflexionsverlust herausgestellt.

Bei einer weiteren Ausführungsform umfasst die Wärmeeintragseinrichtung eine Kühlung, beispielsweise eine Wasserkühlung. Insbesondere kann der Körper der Wärmeeintragseinrichtung Kühlkanäle aufweisen, durch die im Betrieb ein Kühlmedium geleitet werden kann. Bei jeder Reflexion des oder der Laserstrahlen an den Wänden des Lichtleithohlraums wird ein Teil der Energie, typischerweise etwa 5 %, vom Körper der Wärmeeintragseinrichtung absorbiert. Die damit verbundene Heizleistung wird vorzugsweise durch eine Kühlung abgeführt, damit sich der Körper nicht übermäßig erhitzt. Bei einer Laserleistung von 1 kW und dreimaliger Reflexion im Lichtleithohlraum fällt beispielsweise eine Heizleistung von etwa 150 W an, so dass die Kühlung vorzugsweise eine entsprechende Kühlleistung von mindestens 150 W, weiter bevorzugt mindestens 200 W aufweist.

Bei einer weiteren Ausführungsform ist der Körper der Wärmeeintragseinrichtung mehrteilig ausgebildet und umfasst insbesondere einen auswechselbaren Teil, der den letzten Teil des Lichtleithohlraums bis zur optischen Austrittsöffnung umfasst. Unter dem letzten Teil wird der Teil des Lichleithohlraums verstanden, der bis zur optischen Austrittsöffnung reicht und damit dem Schweiß- oder Lötbereich am nächsten ist.

Die Wärmeeintragseinrichtung kann durch die beim Schweiß- oder Lötvorgang auftretende Hitze bzw. umherspritzendes flüssiges Metall beschädigt oder verschmutzt werden. Insbesondere kann eine Verschmutzung des Lichtleithohlraums bzw. im Bereich der optischen Austrittsöffnung auftreten. Durch die mehrteilige Ausführung des Körpers der Wärmeeintragseinrichtung ist es möglich, besonders verschmutzte oder beschädigte Teile auszutauschen, ohne die gesamte Wärmeeintragseinrichtung austauschen zu müssen. Insbesondere kann der Teil der Wärmeeintragseinrichtung, der den letzten Teil des Lichtleithohlraums bis zur optischen Austrittsöffnung umfasst, als auswechselbares Teil ausgebildet werden. Auf diese Weise lassen sich die Wartungskosten und auch die Wartungszeiten erheblich reduzieren, da bei Austausch nur eines Teils typischerweise keine aufwändige Neujustierung der Wärmeeintragseinrichtung erforderlich ist.

Vorzugsweise kann an der Wärmeeintragseinrichtung ein Schnellspannsystem wie zum Beispiel eine Bajonett-Verriegelung vorgesehen sein, um den auswechselbaren Teil des Körpers an die übrige Wärmeeintragseinrichtung anzuschließen.

Bei einer weiteren Ausführungsform ist am Lichtleithohlraum ein Schutzglas zum Schutz des Lichtleithohlraums vorgesehen, insbesondere an der optischen Austrittsöffnung. Dass Schutzglas lässt den Laserstrahl passieren, blockiert jedoch Verschmutzungen wie insbesondere Metallspritzer. Auf diese Weise kann der Lichtleithohlraum teilweise oder vollständig vor derartigen Verschmutzung geschützt werden. Bei einer mehrteiligen Ausführung des Körpers der Wärmeeintragseinrichtung kann das Schutzglas beispielsweise am auswechselbaren Teil vorgesehen sein und ist dadurch zusammen mit diesem auswechselbar. Alternativ kann das Schutzglas auch an dem Teil des Körpers angeschlossen werden, an den der auswechselbare Teil angeschlossen wird. Auf diese Weise kann das Schutzglas auch beim Austausch des auswechselbaren Teils an der Wärmeeintragseinrichtung verbleiben.

Bei einer weiteren Ausführungsform ist eine Druckeinrichtung vorgesehen, die dazu eingerichtet ist, im Lichtleithohlraum einen Überdruck gegenüber dem Umgebungsdruck zu bewirken. Bei der Druckeinrichtung kann es sich beispielsweise um eine Druckluftzuführung in den Lichtleithohlraum handeln. Durch den Überdruck im Lichtleithohlraum kann das Eindringen von Verschmutzungen wie Metallspritzern in den Lichtleithohlraum reduziert oder verhindert werden.

Bei einer weiteren Ausführungsform ist die Wärmeeintragseinrichtung an einem Schweißbrenner montiert, beispielsweise mit einer dafür vorgesehenen Montageplatte. Auf diese Weise kann die Wärmeeintragseinrichtung positionsfest zum Schweißbrenner angeordnet werden, so dass die Positionierung der Wärmeeintragseinrichtung zum Schweiß- bzw. Lötbereich des Schweißbrenners nur einmalig eingestellt werden muss. Diese Ausgestaltung ist insbesondere bei Handschweißbrennern vorteilhaft, der auf diese Weise wie ein normaler Handschweißbrenner bedient werden kann, ohne dass es erforderlich ist, die Wärmeeintragseinrichtung separat zu positionieren oder mit der Schweißnaht mitzuführen.

Bei einer weiteren Ausführungsform ist eine Positioniereinrichtung zur relativen Positionierung der Wärmeeintragseinrichtung zum Schweißbrenner und/oder zum zu schweißenden Werkstück vorgesehen. Die Positioniereinrichtung kann insbesondere zur Verstellung der Wärmeeintragseinrichtung entlang der optischen Achse des Lichtleithohlraums eingerichtet sein. Auf diese Weise kann der Abstand der Wärmeeintragseinrichtung bzw. der optischen Austrittsöffnung zum Werkstück eingestellt werden. Die Positioniereinrichtung kann für die Verstellung entlang der optischen Achse beispielsweise eine Zahnradmechanik aufweisen.

Bei einer weiteren Ausführungsform ist die Vorrichtung dazu eingerichtet die pro Zeit über die Wärmeeintragseinrichtung in den Schweiß- bzw. Lötbereich eingebrachte zusätzliche Wärmemenge abhängig von einer empfangenen Benutzereingabe einzustellen. Zu diesem Zweck kann an dem Schweißbrenner oder an einem mit dem Schweißbrenner verbundenen Schweißgerät eine Benutzerschnittstelle vorgesehen sein, über die ein Benutzer die gewünschte Wärmemenge einstellen kann. Damit kann die zusätzliche Wärmemenge vom Benutzer bedarfsgemäß eingestellt werden. Die pro Zeit eingebrachte Wärmemenge kann insbesondere über die Leistung eines oder mehrerer Laser bzw. Laserstrahlen eingestellt werden.

Bei einer entsprechenden Ausführungsform des Verfahrens wird die pro Zeit in den Schweiß- bzw. Lötbereich eingebrachte zusätzliche Wärmemenge abhängig von einer empfangenen Benutzereingabe eingestellt, insbesondere durch Steuerung der Leistung eines oder mehrerer Laserstrahlen.

Bei einer weiteren Ausführungsform ist eine Steuereinrichtung vorgesehen, die dazu eingerichtet ist, das zuvor beschriebene Verfahren bzw. eine Ausführungsform dieses Verfahrens durchzuführen. Beispielsweise kann die Steuereinrichtung einen Mikroprozessor und einen damit verbundenen Speicher umfassen, wobei der Speicher Befehle enthält, deren Ausführungen auf den Prozessor die Durchführung des Verfahrens bzw. einer Ausführungsform davon bewirkt.

Die oben genannte Aufgabe wird weiterhin erfindungsgemäß zumindest teilweise gelöst durch die Verwendung der zuvor beschriebenen Vorrichtung und/oder des zuvor beschriebenen Verfahrens bzw. einer Ausführungsform davon zum Fügen eines oder mehrerer Komponenten aus einem Leichtbauwerkstoff, insbesondere aus Magnesium oder Aluminium oder einer Magnesiumlegierung oder Aluminiumlegierung. Die Vorrichtung und das Verfahren sind insbesondere zum Fügen derartiger Werkstoffe geeignet und stellen der Industrie somit ein wirtschaftliches und reproduzierbares Fügeverfahren für Leichtbauwerkstoffe, insbesondere Magnesium und Magnesiumlegierungen zur Verfügung.

Weitere Merkmale und Vorteile der vorliegenden Erfindung werden nachfolgend anhand von Ausführungsbeispielen beschrieben, wobei auf die beigefügte Zeichnung Bezug genommen wird. Die Ausführungsbeispiele werden insbesondere für einen Schweißprozess beschrieben, sind jedoch in entsprechender Weise auf einen Lötprozess übertragbar.

In den Zeichnungen zeigen
- Fig. 1: ein erstes Ausführungsbeispiel der Vorrichtung und des Verfahrens zum Lichtbogenschweißen oder Lichtbogenlöten mit einer abschmelzenden Elektrode,
- Fig. 2: ein mit der Vorrichtung aus Fig.1 geschweißtes Werkstück während des laufenden Schweißprozesses,
- Fig. 3: eine alternative Wärmeeintragseinrichtung für ein zweites Ausführungsbeispiel der Vorrichtung zum Lichtbogenschweißen oder Lichtbogenlöten mit einer abschmelzenden Elektrode,
- Fig. 4: eine weitere alternative Wärmeeintragseinrichtung für ein drittes Ausführungsbeispiel der Vorrichtung zum Lichtbogenschweißen oder Lichtbogenlöten mit einer abschmelzenden Elektrode,
- Fig. 5: eine weitere alternative Wärmeeintragseinrichtung für ein viertes Ausführungsbeispiel der Vorrichtung zum Lichtbogenschweißen oder Lichtbogenlöten mit einer abschmelzenden Elektrode,
- Fig. 6a-c: mögliche Querschnitte von Lichtleithohlräumen verschiedener Wärmeeintragseinrichtungen,
- Fig. 7a-b: mögliche Querschnitte von Lichtleithohlräumen verschiedener Wärmeeintragseinrichtungen mit Strahlteilung,
- Fig. 8: ein Diagramm mit gemessenen Benetzungswinkeln abhängig von der durch die Wärmeeintragseinrichtung erreichte Vorwärmtemperatur,
- Fig. 9: ein Diagramm mit gemessenen Benetzungswinkeln abhängig von der Laserleistung der Wärmeeintragseinrichtung und
- Fig.10: Querschnitte einer Lasernaht mit und ohne Einsatz der Wärmeeintragseinrichtung.

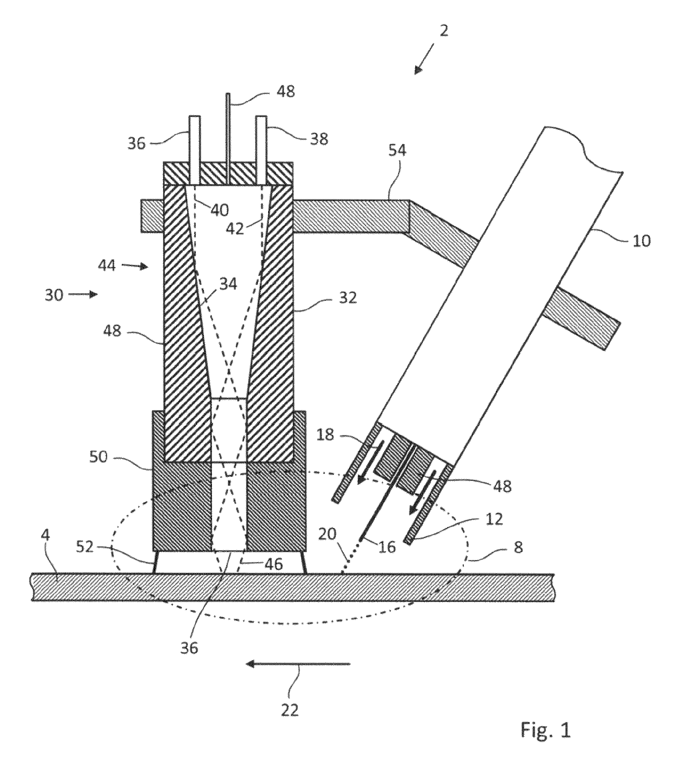

Fig.1 zeigt ein erstes Ausführungsbeispiel der Vorrichtung und des Verfahrens zum Lichtbogenschweißen oder Lichtbogenlöten mit einer abschmelzenden Elektrode,

Die Vorrichtung 2 umfasst einen Schweißbrenner 10 zum Metallschutzgasschweißen mit einer Schweißdüse 12, aus der während des Schweißvorgangs durch eine Drahtelektrodenführung 14 eine Drahtelektrode 16 geführt wird. Der Schweißbrenner 10 ist über ein Schlauchpaket an ein Schweißgerät (nicht dargestellt) angeschlossen. Über das Schlauchpaket wird der Schweißbrenner 10 mit Schutzgas 18 versorgt, das während des Schweißvorgangs aus der Schweißdüse 12 austritt. Die Drahtelektrode 16 ist über die als Kontaktierungshülse ausgebildete Drahtelektrodenführung 14 an eine Schweißstromquelle des Schweißgeräts angeschlossen.

Zum Schweißen eines Werkstücks 4 wird die Drahtelektrode 16 auf das Werkstück 4 aufgesetzt und ein Zündstrom initiiert, so dass beim Abheben der Drahtelektrode 16 ein Schweißlichtbogen 20 von der Drahtelektrode 16 zum Werkstück 4 verläuft. Durch die hierdurch in das Werkstück 4 eingebrachte Wärme schmilzt der Werkstoff des Werkstücks 4 auf. Gleichzeitig schmilzt auch die Drahtelektrode 16 ab und stellt dadurch Material für die Schweißnaht zur Verfügung. Die abschmelzende Drahtelektrode 16 wird mittels einer Drahtelektrodenfördereinrichtung nachgeführt, so dass an der Schweißdüse 12 jederzeit ausreichend Draht als Drahtelektrode 16 zur Verfügung steht. Das aus der Schweißdüse 12 austretende Schutzgas 18 umgibt den verflüssigten Werkstoff des Werkstücks 4 und die Drahtelektrode 16 und verhindert auf diese Weise eine Oxidation des Metalls.

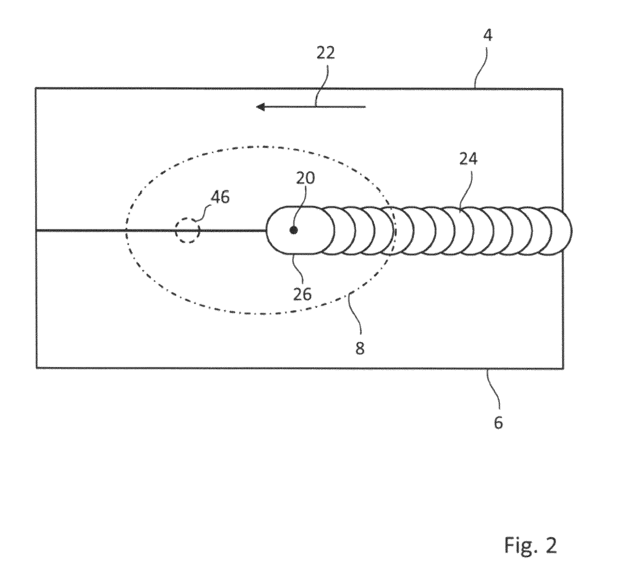

Figur 2 zeigt schematisch das Werkstück 4 in Aufsicht während des laufenden Schweißprozesses. Das Werkstück 4 soll vorliegend mit einem zweiten Werkstück 6 verschweißt werden. Zu diesem Zweck wird der Schweißbrenner 10 in Schweißrichtung 22 an den Werkstücken entlang geführt, so dass sich die Schweißnaht 24 ausbildet. Die aktuelle Position des Lichtbogens 20 am Werkstück ist in Figur 2 durch einen schwarzen Punkt gekennzeichnet. In diesem Bereich schmilzt der Werkstoff der Werkstücke 4, 6 zu einem Schweißbad 26 auf. Durch die abschmelzende Drahtelektrode 16 wird dem Schweißbad 26 noch zusätzliches Material für die Schweißnaht 24 zugeführt.

Der Bereich um die aktuelle Schweißposition, d.h. um die aktuelle Position des Lichtbogens 20 auf den Werkstücken bzw. des Schweißbads 26 wird als Schweißbereich 8 bezeichnet.

Der für den Schweißvorgang erforderliche Wärmeeintrag in die Werkstücke 4, 6 erfolgt bei herkömmlichen Schweißbrennern allein über den Strom des Lichtbogens, d.h. über den Schweißstrom. Bei Erhöhung des Schweißstroms erhöht sich auch die Intensität des Lichtbogens 20, so dass eine entsprechend größere Wärmemenge in den Schweißbereich 8 gelangt. Mit der Erhöhung des Schweißstroms geht zudem immer auch ein verstärktes Abschmelzen der Drahtelektrode 16 einher, so dass gleichzeitig auch der Materialeintrag der Drahtelektrode 16 in den Schweißbereich 8 erhöht wird.

Um auch unabhängig von einer Veränderung des Materialeintrags der Drahtelektrode 16 den Wärmeeintrag in den Schweißbereich 8 verändern zu können, umfasst die Vorrichtung zusätzlich eine Wärmeeintragseinrichtung 30, die dazu eingerichtet ist, zusätzliche Wärme in den Schweißbereich 8 des Schweißbrenners 10 einzubringen.

Zu diesem Zweck weist die Wärmeeintragseinrichtung 30 einen Körper 32 mit einem rohrförmigen Lichtleithohlraum 34 auf, wobei der Lichtleithohlraum 34 zu einer optischen Austrittsöffnung 36 verläuft. Bei dem Körper 32 kann es sich beispielsweise um ein innenseitig poliertes Kupferrohr handeln.

An dem Körper 32 sind eine erste Lasereinkopplungseinrichtung 36 und eine zweite Lasereinkopplungseinrichtung 38 vorgesehen, von denen jede dazu eingerichtet ist, einen Laserstrahl 40, 42 in den rohrförmigen Lichtleithohlraum 34 einzukoppeln, so dass die Laserstrahlen 40, 42 durch den Lichtleithohlraum 34 und die optische Austrittsöffnung 36 in den Schweißbereich 8 des Schweißbrenners 10 gelangen.

Bei den Lasereinkopplungseinrichtungen 36,38 kann es sich beispielsweise um Glasfasern handeln, die jeweils einen von einem Industrielaser erzeugten Laserstrahl in den Lichtleithohlraum 34 einkoppeln. Die Wellenlängen der Laserstrahlen 40, 42 können gleich oder auch verschieden sein. Die Laserleistung der beiden Laserstrahlen 40,42 kann beispielsweise jeweils im Bereich von 400 bis 500 W liegen.

Der Lichtleithohlraum 34 umfasst einen sich in Richtung der optischen Austrittsöffnung 36 verjüngenden konischen Abschnitt 44, der die gewünschte Form und Größe des Laserstrahls einstellt. Die Lasereinkopplungseinrichtungen 36, 38 sind so außerhalb der optischen Achse, d.h. der Mittelachse des Lichtleithohlraums 34 angeordnet, dass die Laserstrahlen 40, 42 auf die Wand des Lichtleithohlraums 34 im konischen Abschnitt 44 gerichtet sind. Die Laserstrahlen 40, 42 werden auf diese Weise an den Wänden des Lichtleithohlraums 34 reflektiert. Dies führt zu einer Homogenisierung und Überlagerung der beiden Laserstrahlen 40, 42, so dass aus der Austrittsöffnung 36 ein vergleichmäßigter Laserstrahl 46 in den Schweißbereich 8 gelangt.

Die Laserstrahlen 40, 42 werden in Fig. 1 parallel zur optischen Achse eingekoppelt. Sie können jedoch auch unter einem Winkel zur optischen Achse eingekoppelt und so auf die Wand des Lichtleithohlraums 34 gerichtet werden.

Es sei erwähnt, dass Fig.1 nur die Ausbreitungsrichtung der Laserstahlen 40, 42 zeigt. Tatsächlich weisen die Laserstrahlen 40, 42 typischerweise bereits einen Strahldurchmesser und eine Divergenz auf, die auch ohne den konischen Abschnitt 44 zu Reflexionen an der Wand des Lichtleithohlraums 34 führen würden.

Der Spot des Laserstrahls 46 am Werkstück 4 bzw. 6 ist in Fig. 2 eingezeichnet. Die Spotgröße des Laserstrahls beträgt mindestens 3 mm. Damit unterscheidet sich der Laserstrahl 46 erheblich von Schweißlaserstrahlen zum Laserschweißen, die typischerweise eine Spotgröße von weniger als 1 mm und damit eine erheblich höhere Leistungsdichte aufweisen, die zum Aufschmelzen des zu schweißenden Werkstücks ausreicht.

Die Leistungsdichte des Laserstrahls 46, d.h. die von dem Laserstrahl 46 pro Zeit und Fläche auf das Werkstück 4 bzw. 6 übertragene Wärmemenge, reicht hingegen allein nicht aus, um das Werkstück 4 bzw. 6 aufzuschmelzen, sondern stellt nur eine zusätzliche Wärme zu der bereits vom Lichtbogen 20 eingebrachten Wärme zur Verfügung. Auf diese Weise ist es möglich, den Wärmeeintrag im Schweißbereich 8 unabhängig vom Schweißstrom und vom Lichtbogen 20 einzustellen. Es wird also eine Entkoppelung von Wärmeeintrag und Materialeintrag der Drahtelektrode 16 erreicht.

Die Wärmeeintragseinrichtung 30 kann so ausgerichtet sein, dass der Spot des Laserstrahls 46 unmittelbar auf das Schweißbad 26 fällt. Alternativ kann der Spot des Laserstrahls 46 wie in den Figuren 1 und 2 auch in Schweißrichtung 22 vor dem Schweißbad 26 positioniert sein, so dass das Werkstück 4 bzw. 6 für den Schweißprozess vorgewärmt wird.

Zur einfacheren Positionierung kann die Wärmeeintragseinrichtung 30 noch eine Pilotlasereinkopplungseinrichtung 46 aufweisen, die einen Pilotlaserstrahl auf der optischen Achse in den Lichtleithohlraum 34 einkoppelt. Der Strahldurchmesser des Pilotlaserstrahls ist vorzugsweise so gering, dass der Pilotlaserstrahl im Wesentlichen ohne Reflexionen an der Wand des Lichtleithohlraum 34 durch die Austrittsöffnung 36 fällt und so durch seinen Laserspot auf dem Werkstück 4 bzw. 6 die Ausrichtung der Wärmeeintragseinrichtung 30 und/oder des Schweißbrenners 10 anzeigen kann. Der Körper 32 der Wärmeeintragseinrichtung 30 ist vorliegend mehrteilig ausgebildet und umfasst einen festen Teil 48 sowie einen auswechselbaren Teil 50, der den letzten Teil des Lichtleithohlraums 34 bis zur optischen Austrittsöffnung 36 umfasst und der mittels eines Verriegelungsmechanismus lösbar an dem festen Teil 48 befestigt ist.

Der auswechselbaren Teil 50 ist dem Schweißbereich 8 am nächsten angeordnet und unterliegt daher der größten thermischen Belastung durch den Lichtbogen 20 bzw. kann von Spritzern des verflüssigten Metalls verschmutzt oder beschädigt werden. Durch die mehrteilige Ausbildung des Körpers 32 kann der auswechselbare Teil bei Verschmutzung oder Beschädigung einfach ausgetauscht werden, ohne dass ein Austausch der gesamten Wärmeeintragseinrichtung 30 erforderlich ist.

Für einen zusätzlichen Schutz des Lichtleithohlraums 34 kann an der Austrittsöffnung oder auch am unteren Ende des festen Teils 48 ein Schutzglas vorgesehen sein, das den Laserstrahl 46 passieren lässt, den Lichtleithohlraum 34 jedoch vor Metallspritzern schützt. Alternativ kann eine Druckeinrichtung beispielsweise in Form einer Druckluftleitung vorgesehen sein, mit der im Lichtleithohlraum 34 ein Überdruck gegenüber dem Umgebungsdruck eingestellt wird. Auch hierdurch kann das Eindringen von Metallspritzern in den Lichtleithohlraum 34 reduziert oder unterbunden werden.

Um die Austrittsöffnung 36 ist bevorzugt eine Bürstenanordnung 52 angeordnet, mit der die Umgebung vor der Streuung oder Reflexionen des Laserstrahls 46 geschützt werden kann. Vorzugsweise wird die Wärmeeintragseinrichtung 30 im Betrieb mit der Bürstenanordnung 52 auf das Werkstück 4 bzw. 6 aufgesetzt, so dass umstehende Personen zuverlässig vor dem Laserstrahl 46 geschützt sind.

Die Wärmeeintragseinrichtung 30 ist in Fig. 1 über eine Montageplatte 54 an dem Schweißbrenner 10 montiert und weist auf diese Weise eine feste Position gegenüber dem Schweißbrenner 10 auf. Dies erleichtert den Handbetrieb des Schweißbrenners 10 zusammen mit der Wärmeeintragseinrichtung 30 und ermöglicht eine zuverlässige Ausrichtung der Wärmeeintragseinrichtung 30 in Bezug auf den Schweißbrenner 10.

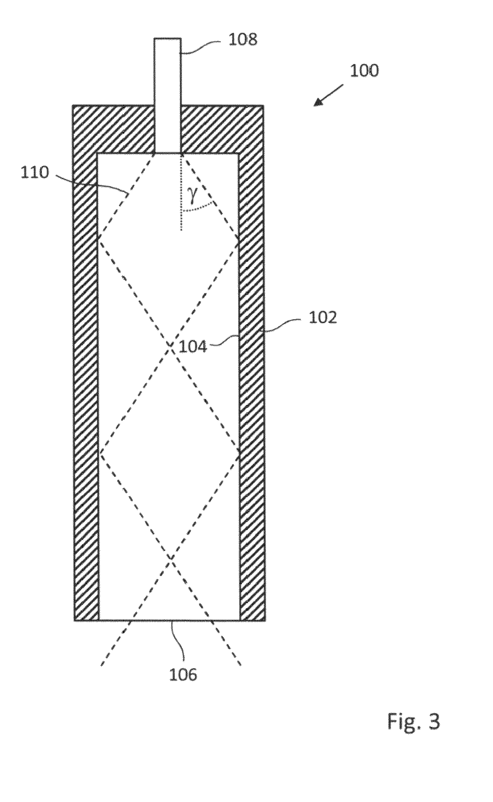

Fig. 3 zeigt eine alternative Wärmeeintragseinrichtung 100 für ein zweites Ausführungsbeispiel der Vorrichtung zum Lichtbogenschweißen oder Lichtbogenlöten mit einer abschmelzenden Elektrode. Die Wärmeeintragseinrichtung 100 kann beispielsweise anstelle der Wärmeeintragseinrichtung 30 in der Vorrichtung 2 verwendet werden.

Die Wärmeeintragseinrichtung 100 umfasst einen Körper 102 mit einem rohrförmigen Lichtleithohlraum 104, der zu einer optischen Austrittsöffnung 106 verläuft. Im Gegensatz zur Wärmeeintragseinrichtung 30 ist bei der Wärmeeintragseinrichtung 100 nur eine einzelne Lasereinkopplungseinrichtung 108 vorgesehen, mit der ein Laserstrahl 110 in den Lichtleithohlraum 104 eingekoppelt werden kann, so dass er durch die Austrittsöffnung 106 in den Schweißbereich eines Schweißbrenners, beispielsweise des Schweißbrenners 10 aus Fig. 1, gelangen kann.

Der eingekoppelte Laserstrahl 110 weist einen bestimmten Strahldurchmesser und eine bestimmte Divergenz auf, die in Fig. 2 durch Winkel γ dargestellt ist und vom sogenannten Strahlparameterprodukt abhängt. Wie zuvor ausgeführt ist dies auch bei den Laserstrahlen 40, 42 aus Figur 1 der Fall, wurde in Figur 1 aus Übersichtsgründen jedoch nicht eingezeichnet.

Durch die Divergenz des Laserstrahls 110 erfolgt auch bei der Wärmeeintragseinrichtung 100 eine Reflexion des Laserstrahls an den Innenwänden des Lichtleithohlraums 104, so dass der Laserstrahl auf dem Weg zur Austrittsöffnung 106 homogenisiert wird und damit mit vergleichmäßigter Leistungsdichte auf das zu schweißende Werkstück fällt. Durch die Absorption des Laserstrahls am Werkstück wird damit zusätzliche Wärme in den Schweißbereich eingebracht, so dass der Wärmeeintrag unabhängig vom Lichtbogen des Schweißbrenners und damit unabhängig vom Materialeintrag der Drahtelektrode 16 verändert werden kann.

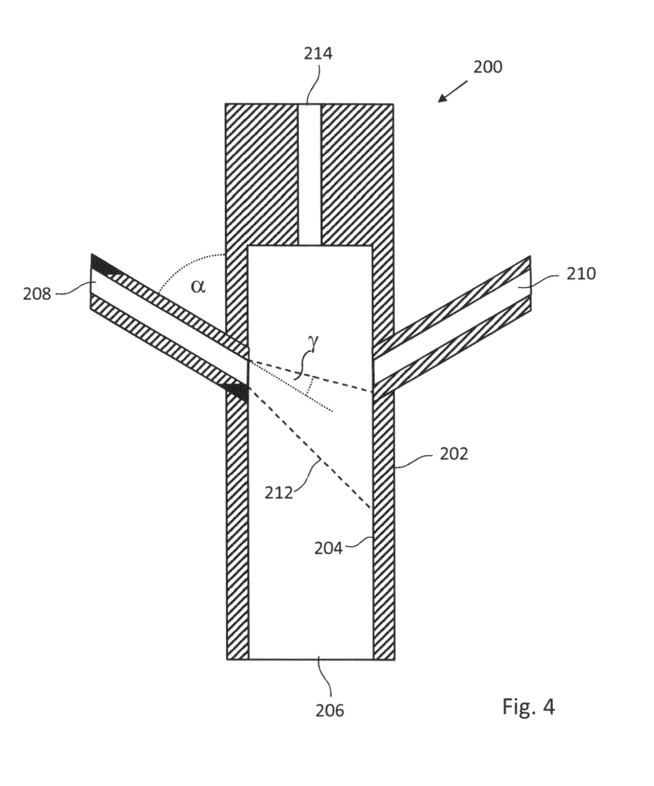

Fig. 4 zeigt eine weitere alternative Wärmeeintragseinrichtung 200 für ein drittes Ausführungsbeispiel der Vorrichtung zum Lichtbogenschweißen oder Lichtbogenlöten mit einer abschmelzenden Elektrode. Die Wärmeeintragseinrichtung 200 kann beispielsweise anstelle der Wärmeeintragseinrichtung 30 in der Vorrichtung 2 verwendet werden.

Die Wärmeeintragseinrichtung 200 umfasst einen Körper 202, mit einem Lichtleithohlraum 204, der zu einer Austrittsöffnung 206 verläuft. Es sind zwei Lasereinkopplungseinrichtungen 208 und 210 vorgesehen, die bei der Wärmeeintragseinrichtung 200 seitlich an dem Körper 202 angeschlossen sind, so dass die Laserstrahlen unter einem Winkel α zur optischen Achse des Lichtleithohlraums 204 eingekoppelt werden. In Fig. 4 ist der Übersicht halber nur ein Laserstrahl 214 der beiden Laserstrahlen gezeigt. Der Laserstrahl 214 weist eine Divergenz auf, die wiederum durch den Winkel γ zur Ausbreitungsrichtung des Laserstrahls 212 dargestellt ist. Der Winkel α ist so gewählt, dass er kleiner ist als die Divergenz γ. Auf diese Weise können schädliche Rückstrahlungen des Laserstrahls vermieden werden.

Zur einfacheren Ausrichtung der Wärmeeintragseinrichtung 200 ist noch eine Pilotlasereinkopplungseinrichtung 214 vorgesehen, die einen Pilotlaser auf der optischen Achse der Wärmeeintragseinrichtung 200 einkoppelt. Der Spot des Pilotlasers zeigt auf dem zu schweißenden Werkstück die Positionierung der Wärmeeintragseinrichtung 200 an.

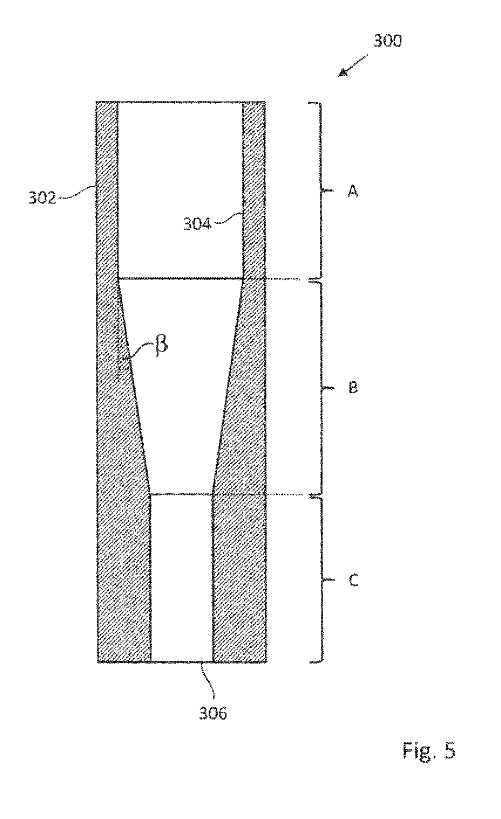

Fig. 5 zeigt eine weitere alternative Wärmeeintragseinrichtung 300 für ein viertes Ausführungsbeispiel der Vorrichtung zum Lichtbogenschweißen oder Lichtbogenlöten mit einer abschmelzenden Elektrode. Die Wärmeeintragseinrichtung 300 kann beispielsweise anstelle der Wärmeeintragseinrichtung 30 in der Vorrichtung 2 verwendet werden.

Die Wärmeeintragseinrichtung 300 umfasst einen Körper 302 mit einem rohrförmigen Lichtleithohlraum 304, der zu einer Austrittsöffnung 306 verläuft. Die Lasereinkopplungseinrichtungen sind in Figur 5 der Übersicht halber weggelassen, können aber beispielsweise wie bei den Wärmeeintragseinrichtungen 30, 100 oder 200 ausgebildet sein.

Die Wärmeeintragseinrichtung 300 ist in drei Abschnitte aufgeteilt, die in Figur 5 durch die Buchstaben A, B und C bezeichnet sind.

Abschnitt A dient der Einkopplung des Laserstrahls. An diesem Abschnitt sind entsprechend ein oder mehrere Lasereinkopplungseinrichtungen vorgesehen. Die ein oder mehreren Laserstrahlen können parallel zur optischen Achse des Lichtleithohlraums 304 oder auch in einem Winkel dazu eingekoppelt werden.

Abschnitt B dient zur Formung des Laserstrahls und wird auch als Integrator bezeichnet. Insbesondere weist Abschnitt B einen konischen Teil des Lichtleithohlraums 304 auf, dessen Winkel zur optischen Achse in Fig. 4 durch β bezeichnet ist.

Abschnitt C dient zur Endformung des Laserstrahls auf den gewünschten Durchmesser und/oder auf eine gewünschte Geometrie.

Die Wärmeeintragseinrichtung 300 kann vorzugsweise modular aufgebaut sein. Beispielsweise können die Abschnitte A, B und C separate Module darstellen, die sich in gewünschter Weise miteinander kombinieren lassen. Einige Module können auch fest miteinander verbunden sein. Besonders bevorzugt ist der Abschnitt C als auswechselbares Teil ausgebildet, da dieser im Bereich der Austrittsöffnung 306 und damit dem Schweißbereich am nächsten liegt, so dass dieser Teil besonders einer thermischen Belastung oder Verschmutzung durch flüssige Metallspritzer unterliegt. Zu diesem Zweck kann der den Abschnitt C umfassenden Teil mit dem die Abschnitte A und B umfassende Teil beispielsweise durch eine lösbare Verbindung wie zum Beispiel eine Schraub- oder Bajonettverbindung verbunden sein.

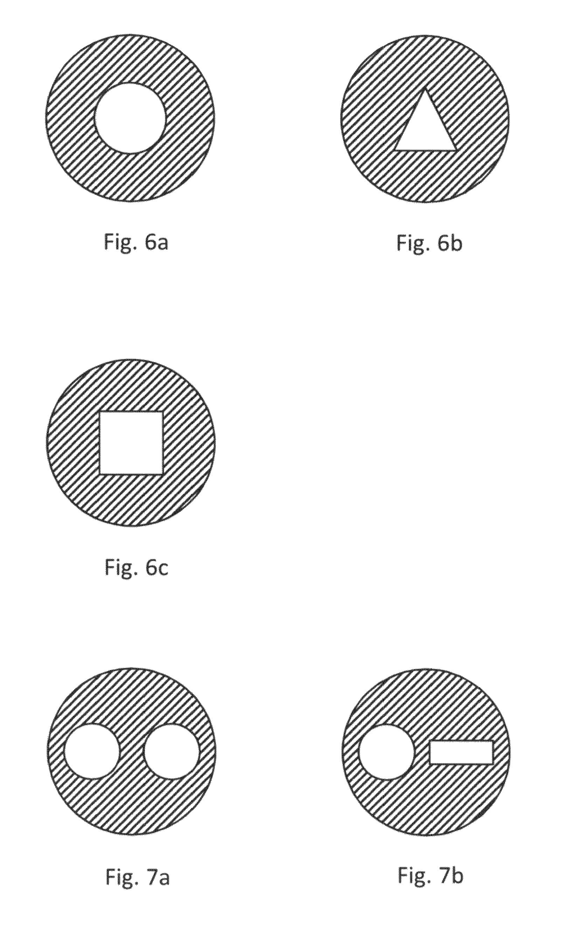

Der Querschnitt des Abschnitts C kann entsprechend der gewünschten Strahlform gewählt werden. Die Figuren 6a-c zeigen Beispiele für mögliche Querschnitte von Lichtleithohlräumen verschiedener Wärmeeintragseinrichtungen, und zwar insbesondere für den Abschnitt C der Wärmeeintragseinrichtung 300. Der Querschnitt des Lichtleithohlraums 304 kann im Abschnitt C beispielsweise kreisförmig (Figur 6a), dreieckförmig (Figur 6b) oder auch quadratisch (Figur 6c) ausgebildet sein.

Der Abschnitt C kann auch für eine Strahlteilung ausgebildet sein, so dass der durch den Lichtleithohlraum 304 geleitete Laserstrahl in zwei oder mehrere Teilstrahlen aufgeteilt wird. Zu diesem Zweck kann sich der Lichtleithohlraums 304 in zwei oder mehrere Lichtleithohlräume aufteilen. Die Fig. 7a-b zeigen Beispiele für mögliche Querschnitte bei einer Strahlteilung.

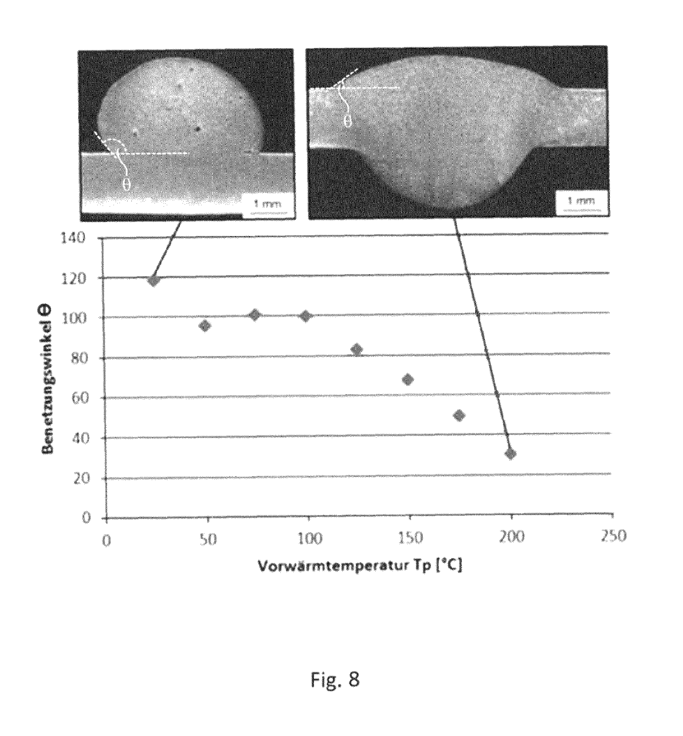

Die Wirkungsweise der Erfindung wurde anhand von Versuchen nachgewiesen, deren Ergebnisse in den Fig. 8 bis 10 dargestellt sind. Für die Versuche wurden Bleche aus der Magnesiumlegierung AZ31 mit der zuvor beschrieben Vorrichtung bzw. dem zuvor beschriebenen Verfahren verschweißt, wobei die durch die Wärmeeintragseinrichtung in den Schweißbereich eingebrachte Wärmeleistung variiert wurde. Eine Wärmeleistung von 0 W (deaktivierte Wärmeeintragseinrichtung) entspricht einem konventionellen Schweißverfahren.

Fig. 8 zeigt ein Diagramm mit gemessenen Benetzungswinkeln abhängig von der durch die Wärmeeintragseinrichtung erreichten Vorwärmtemperatur. Auf der Abszisse ist die Vorwärmtemperatur Tp in Grad Celsius und auf der Ordinate der Benetzungswinkel θ in Grad (°) aufgetragen. Unter der Vorwärmtemperatur wird die Temperatur verstanden, auf die die Bleche mit der Wärmeeintragseinrichtung im Schweißbereich aufgewärmt werden. Bei dem ersten Messpunkt von links war die Wärmeeintragseinrichtung deaktiviert, so dass die Vorwärmtemperatur bei dieser Messung Raumtemperatur (ca. 25 °C) entspricht.

Unter dem Benetzungswinkel wird der Winkel zwischen der Blechoberfläche und der Wulst der fertigen Schweißnaht verstanden. Für die Versuche bei 25 °C (deaktivierte Wärmeeintragseinrichtung, d.h. konventioneller Schweißprozess) und bei 200 °C Vorwärmtemperatur zeigt Fig. 8 zusätzlich Schnitte der Fügenaht. In den Schnitten ist jeweils der Benetzungswinkel θ eingezeichnet.

Die Versuche zeigen, dass der Benetzungswinkel bei steigender Vorwärmtemperatur abnimmt, so dass eine bessere Benetzung der Bleche erreicht wird. Während die Schweißnaht beim konventionellen Schweißprozess (Vorwärmtemperatur = 25 °C) mit einem großen Benetzungswinkel tropfenartig auf dem Stumpfstoß der beiden Bleche aufliegt, wird durch den zusätzlichen Wärmeeintrag erreicht, dass die Schweißnaht den Bereich des Stumpfstoßes gut ausfüllt und so eine gute Schweißverbindung der Bleche sicherstellt wird, wie der Schnitt bei der Vorwärmtemperatur von 200 °C zeigt.

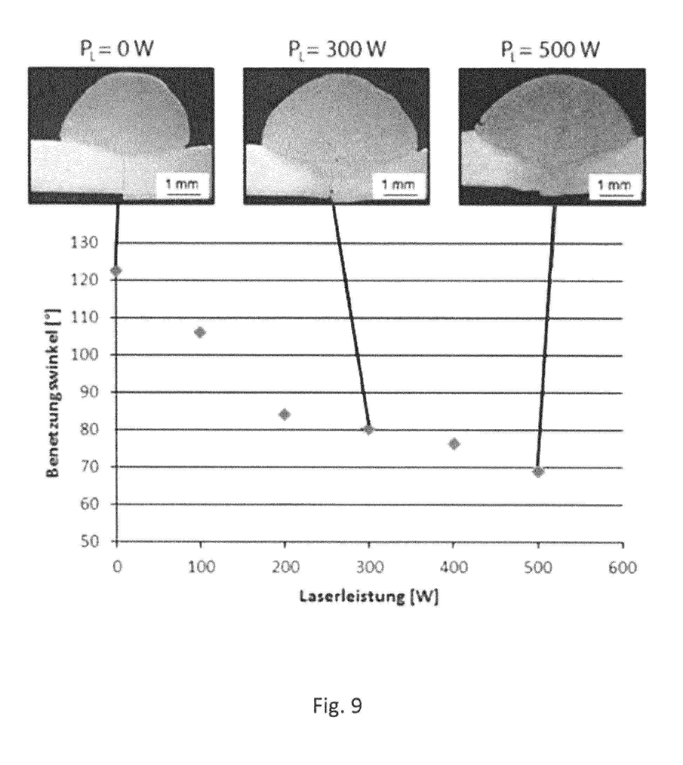

Wie Fig. 8 zeigt auch Fig. 9 ein Diagramm mit gemessenen Benetzungswinkeln, diesmal jedoch abhängig von der Laserleistung, mit dem die Laser der Wärmeeintragseinrichtung betrieben wurden. Die Laserleistung entspricht der Gesamtleistung, die durch die beiden verwendeten Laser eingebracht wird. Zusätzlich zeigt Fig. 9 drei Schnitte der Schweißnaht bei den Laserleistungen P_{L} von 0 W (d.h. bei deaktivierter Wärmeeintragseinrichtung) sowie 300 W und 500 W. In Übereinstimmung mit den Ergebnissen aus Fig. 8 wird der Benetzungswinkel mit steigender Laserleistung kleiner, so dass die Schweißnaht die Bleche besser benetzt und den Stumpfstoß der verschweißten Bleche besser ausfüllt.

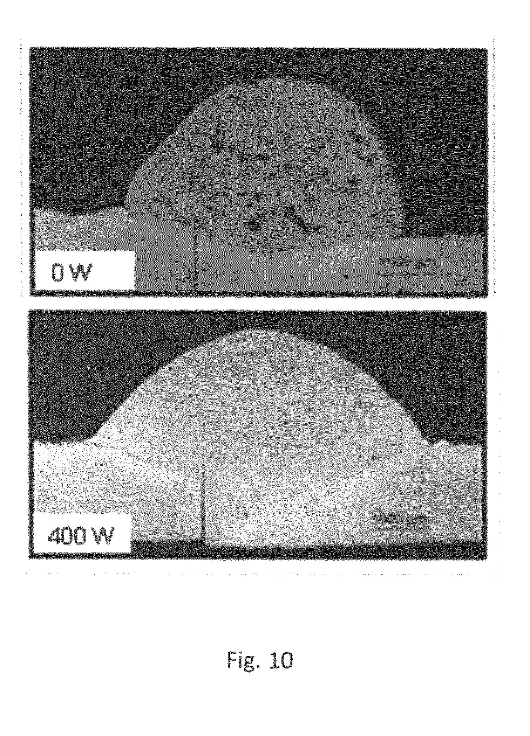

Fig. 10 zeigt zwei Schweißnahtschnitte, und zwar zum einen nach einem konventionellem Schweißverfahren (obere Abbildung; Laserleistung P_{L} von 0 W) und zum anderen bei Verwendung der Wärmeeintragseinrichtung (untere Abbildung; Laserleistung P_{L} von 400 W). Die beiden Schnitte zeigen deutlich, dass bei der Schweißnaht in der unteren Abbildung eine viel bessere Benetzung der Bleche und insgesamt eine bessere Schweißverbindung erreicht wurde als bei der Schweißnaht in der oberen Abbildung.

Insgesamt kann mit den zuvor beschriebenen Vorrichtungen und Verfahren bei einem Schweißprozess eine Steuerung des Wärmeeintrags unabhängig vom Lichtbogen und damit unabhängig vom Materialeintrag der Drahtelektrode erreicht werden. Dadurch kann die Vorrichtung flexibler und besser an die Schweißbedingungen angepasst werden und es können beim Schweißverfahren bessere Schweißergebnisse erreicht werden, wie die zuvor beschriebenen Versuche zeigen. Entsprechende Vorteile lassen sich bei einem Lötverfahren erzielen.

## Patentansprüche

1. Vorrichtung (2) zum Lichtbogenschweißen oder Lichtbogenlöten mit einer abschmelzenden Elektrode, insbesondere zum Schweißen oder Löten unter Schutzgas,
- mit einem Schweißbrenner (10), der zum Lichtbogenschweißen oder Lichtbogenlöten mit einer abschmelzenden Elektrode, insbesondere zum Schweißen oder Löten unter Schutzgas (18), eingerichtet ist,
**dadurch gekennzeichnet,**
- **dass** die Vorrichtung (2) weiterhin eine Wärmeeintragseinrichtung (30,100, 200, 300) umfasst, die dazu eingerichtet ist, zusätzliche Wärme in den Schweiß- oder Lötbereich (8) des Schweißbrenners (10) einzubringen, insbesondere mittels mindestens eines Laserstrahls (40, 42, 46,110, 214).

2. Vorrichtung nach Anspruch 1,
**dadurch gekennzeichnet,**
**dass** die Wärmeeintragseinrichtung (30,100, 200, 300) dazu eingerichtet ist, mittels mindestens eines Laserstrahls (40,42,46,110, 214) zusätzliche Wärme in den Schweiß- oder Lötbereich (8) des Schweißbrenners (10) einzubringen, wobei die Spotgröße des Laserstrahls (40,42,46,110, 214) im Schweiß- oder Lötbereich (8) mindestens 3 mm beträgt.

3. Vorrichtung nach Anspruch 1 oder 2,
**dadurch gekennzeichnet,**
**dass** die Wärmeeintragseinrichtung (30,100, 200, 300) einen Körper (32,102, 202, 302) mit einem rohrförmigen Lichtleithohlraum (34, 104, 204, 304) aufweist, wobei der Lichtleithohlraum (34, 104, 204, 304) zu einer optischen Austrittsöffnung (36,106, 206,306) verläuft und wobei an dem Körper (32, 102, 202, 302) eine Lasereinkopplungseinrichtung (36, 38,108, 208, 210) vorgesehen ist, die dazu eingerichtet ist, einen Laserstrahls (40, 42, 46, 110, 214) in den rohrförmigen Lichtleithohlraum (34,104, 204, 304) einzukoppeln, so dass der Laserstrahl (40,42,46,110, 214) durch den Lichtleithohlraum (34,104, 204, 304) und die optische Austrittsöffnung (36,106, 206, 306) in den Schweiß- oder Lötbereich (8) des Schweißbrenners (10) gelangt.

4. Vorrichtung nach einem der Ansprüche 1 bis 3,
**dadurch gekennzeichnet,**
**dass** an dem Körper (32,102, 202, 302) der Wärmeeintragseinrichtung (30,100, 200, 300) eine Mehrzahl an Lasereinkopplungseinrichtungen (36, 38,108, 208, 210) vorgesehen ist, von denen jede dazu eingerichtet ist, einen Laserstrahl (40, 42, 46,110,214) in den rohrförmigen Lichtleithohlraum (34, 104, 204, 304) einzukoppeln.

5. Vorrichtung nach einem der Ansprüche 1 bis 4,
**dadurch gekennzeichnet,**
**dass** der Lichtleithohlraum (34, 104, 204,304) einen sich in Richtung der optischen Austrittsöffnung (36,106,206, 306) verjüngenden, konischen Abschnitt (44, B) aufweist, wobei der Winkel (β) des konischen Abschnitts (44, B) zur optischen Achse des Lichtleithohlraums (34,104, 204, 304) vorzugsweise im Bereich von 2° und 10° liegt.

6. Vorrichtung nach einem der Ansprüche 1 bis 5,
**dadurch gekennzeichnet,**
**dass** der Körper (32,102,202, 302) der Wärmeeintragseinrichtung (30,100, 200, 300) mehrteilig ausgebildet ist und einen auswechselbaren Teil (50) umfasst, der den letzten Teil des Lichtleithohlraums (34,104, 204, 304) bis zur optischen Austrittsöffnung (36, 106, 206, 306) umfasst.

7. Vorrichtung nach einem der Ansprüche 1 bis 6,
**dadurch gekennzeichnet,**
**dass** an der optischen Austrittsöffnung (36,106, 206, 306) ein Schutzglas zum Schutz des Lichtleithohlraums (34,104, 204, 304) vorgesehen ist.

8. Vorrichtung nach einem der Ansprüche 1 bis 7,
**dadurch gekennzeichnet,**
**dass** eine Druckeinrichtung vorgesehen ist, die dazu eingerichtet ist, im Lichtleithohlraum (34, 104, 204,304) einen Überdruck gegenüber dem Umgebungsdruck zu bewirken.

9. Vorrichtung nach einem der Ansprüche 1 bis 8,
**dadurch gekennzeichnet,**
**dass** die Wärmeeintragseinrichtung (30,100, 200, 300) an dem Schweißbrenner (10) montiert ist.

10. Vorrichtung nach einem der Ansprüche 1 bis 9,
**dadurch gekennzeichnet,**
**dass** die Vorrichtung (2) dazu eingerichtet ist, die pro Zeit über die Wärmeeintragseinrichtung (30,100, 200,300) in den Schweiß- bzw. Lötbereich (8) eingebrachte zusätzliche Wärmemenge, insbesondere die Leistung eines Laserstrahls (40, 42, 46, 110, 214), abhängig von einer empfangenen Benutzereingabe einzustellen.

11. Vorrichtung nach einem der Ansprüche 1 bis 10,
**dadurch gekennzeichnet,**
**dass** eine Steuereinrichtung vorgesehen ist, die dazu eingerichtet ist, ein Verfahren nach einem der Ansprüche 12 bis 14 durchzuführen.

12. Verfahren zum Lichtbogenschweißen oder Lichtbogenlöten mit einer abschmelzenden Elektrode, insbesondere zum Schweißen oder Löten unter Schutzgas, vorzugsweise unter Verwendung einer Vorrichtung (2) nach einem der Ansprüche 1 bis 11,
- bei dem ein Werkstück (4,6) in einem Schweißbereich (8) mit einer abschmelzenden Elektrode lichtbogengeschweißt bzw. in einem Lötbereich (8) mit einer abschmelzenden Elektrode lichtbogengelötet wird und
- bei dem zusätzliche Wärme in den Schweiß- oder Lötbereich (8) eingebracht wird, insbesondere mittels mindestens eines Laserstrahls (40,42,46,110, 214).

13. Verfahren nach Anspruch 12,
**dadurch gekennzeichnet,**
**dass** das Werkstück (4,6) im Schweiß- oder Lötbereich (8) mit einem Laserstrahl (40, 42, 46, 110, 214) beaufschlagt wird, wobei die Spotgröße des Laserstrahls (40,42,46,110, 214) am Werkstück (4,6) mindestens 3 mm beträgt.

14. Verfahren nach Anspruch 12 oder 13,
**dadurch gekennzeichnet,**
**dass** die pro Zeit in den Schweiß- oder Lötbereich (8) eingebrachte zusätzliche Wärmemenge abhängig von einer empfangenen Benutzereingabe eingestellt wird, insbesondere durch Steuerung der Leistung eines Laserstrahls (40,42,46, 110,214).
